Europäisches Patentamt

European Patent Office

Office européen des brevets

(11) Numéro de publication: **0 196 961**
**B1**

(12) **FASCICULE DE BREVET EUROPEEN**

(45) Date de publication du fascicule du brevet:
**26.10.88**

(21) Numéro de dépôt: **86400569.9**

(22) Date de dépôt: **18.03.86**

(51) Int. Cl.⁴: **B 60 J 3/00**

(54) **Pare-soleil pour véhicule automobile.**

(30) Priorité: **25.03.85 FR 8504427**

(43) Date de publication de la demande:
**08.10.86 Bulletin 86/41**

(45) Mention de la délivrance du brevet:
**26.10.88 Bulletin 88/43**

(84) Etats contractants désignés:
**DE GB IT SE**

(56) Documents cités:
**EP - A - 0 076 174**
**DE - A - 2 220 711**
**DE - A - 2 619 844**
**US - A - 3 843 236**

(73) Titulaire: **Rockwell-CIM, 6, rue Barbès,**
**F-92302 Levallois-Perret (FR)**

(72) Inventeur: **Canadas, Jean-Christophe, Demeure Jules**
**Réline 8 rue Georges Lang, F-88200 Remiremont (FR)**

(74) Mandataire: **Moncheny, Michel et al, c/o Cabinet**
**Lavoix 2 Place d'Estienne d'Orves, F-75441 Paris**
**Cedex 09 (FR)**

ACTORUM AG

## Description

La présente invention a pour objet un pare-soleil pour véhicules automobiles, du type mentionné au préambule de la revendication 1. (Voir document DE-A-2220711)

Dans certains pare-soleil actuels, le miroir est fixé sur le revêtement en PVC par l'intermédiaire d'un encadrement métallique ou plastique qui est lui-même maintenu en place par une plaquette de PVC rigide, soudée sur le PVC de recouvrement. Après la mise en place sur le miroir, les pattes de l'encadrement sont rabattues.

Ce dispositif est onéreux du fait qu'il nécessite une main d'œuvre importante, des stocks intermédiaires ainsi que des manutentions.

Par ailleurs, les documents DE-A-2 619 844 et DE-A-2 220 711 décrivent des pare-soleil dont le miroir est disposé dans un support amovible pouvant être fixé dans un logement par clipsage sur des moyens de retenue solidaires de l'écran du pare-soleil.

Dans ces réalisations connues, les miroirs avec leurs cadres supports doivent être disposés dans le pare-soleil avant mise en place de la feuille de revêtement finale, qui est ensuite soudée au cadre-support ou au miroir lui-même.

Tous ces dispositifs présentent les inconvénients suivants:

– la tenue en température du cadre support est insuffisante, car celui-ci ne peut être qu'en PVC pour être soudable sur le revêtement. Sa déformation à la chaleur commence donc à partir de 75°C, alors que les constructeurs exigent couramment 105°C sans déformation, au regard des nouvelles normes de qualité de plus en plus sévères;

– impossibilité de démonter le miroir sans détruire le revêtement;

– esthétique peu satisfaisante;

– coût de fabrication accru par la soudure du revêtement sur le cadre support du miroir;

– bruyance du miroir dans son logement;

– défaut sur le revêtement de PVC dû au marquage des coins de l'encadrement.

L'invention a pour but d'éliminer ces inconvénients.

Suivant l'invention, le pare-soleil est caractérisé par les moyens mentionnés à la partie caractérisante de la revendication 1.

Le montage du miroir préalablement glissé dans son armature de support se fait après mise en place du revêtement final, est très simple et rapide, ce qui réduit notablement la main d'œuvre nécessaire.

D'autres particularités et avantages de l'invention apparaîtront au cours de la description qui va suivre, faite en référence aux dessins annexés qui en illustrent deux modes de réalisation à titre d'exemples non limitatifs:

– la Figure 1 est une vue en perspective éclatée et avec arrachement partiel d'une première forme de réalisation du pare-soleil conforme à l'invention et de son miroir partiellement engagé dans son support;

– la Figure 2 est une vue en perspective, à échelle agrandie par rapport à la Figure 1, de l'armature de support du miroir et d'un insert métallique prévu pour être disposé dans le logement du paresoleil et pour retenir l'armature de support du miroir par clipsage;

– la Figure 3 est une vue en coupe longitudinale avec arrachements du pare-soleil des Figures 1 et 2 et de l'armature de support du miroir;

– la Figure 4 est une vue de dessus en plan des moyens de retenue du miroir et de son support, formées dans un pare-soleil selon un second mode de réalisation de l'invention;

– la Figure 5 est une vue en coupe longitudinale du miroir logé dans un support correspondant suivant V–V de la Figure 4.

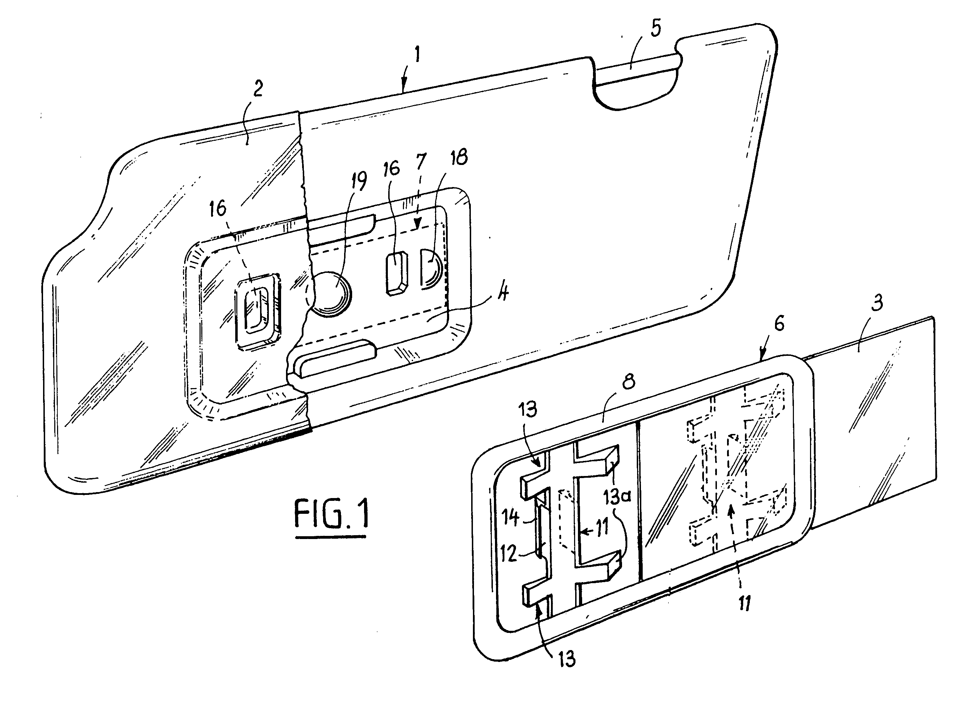

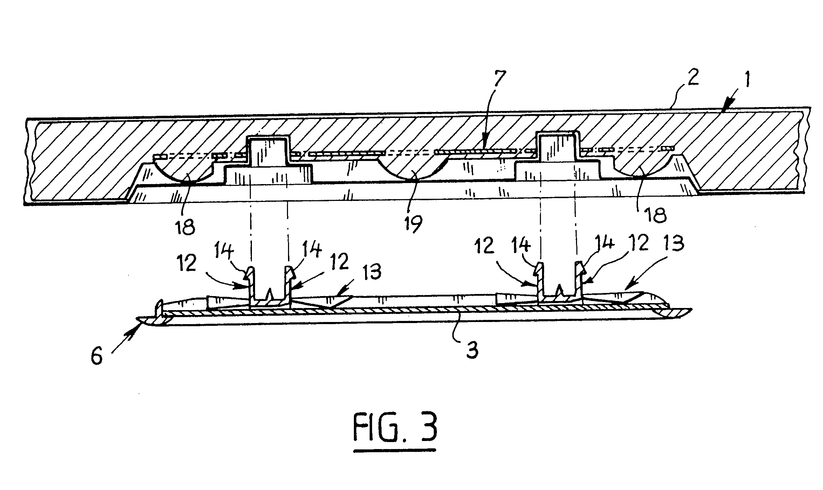

Le pare-soleil représenté aux Figures 1 à 3 est destiné aux véhicules automobiles, et il comporte un écran 1, réalisé de préférence en mousse injectée, recouvert d'un revêtement 2 en une matière plastique appropriée telle qu'une feuille de chlorure de polyvinyle (PVC) et muni d'un miroir 3 fixé dans un logement 4 ménagé dans l'écran 1.

Un axe 5 dont les deux extrémités sont noyées dans l'écran 1 permet d'articuler le pare-soleil au pavillon du véhicule.

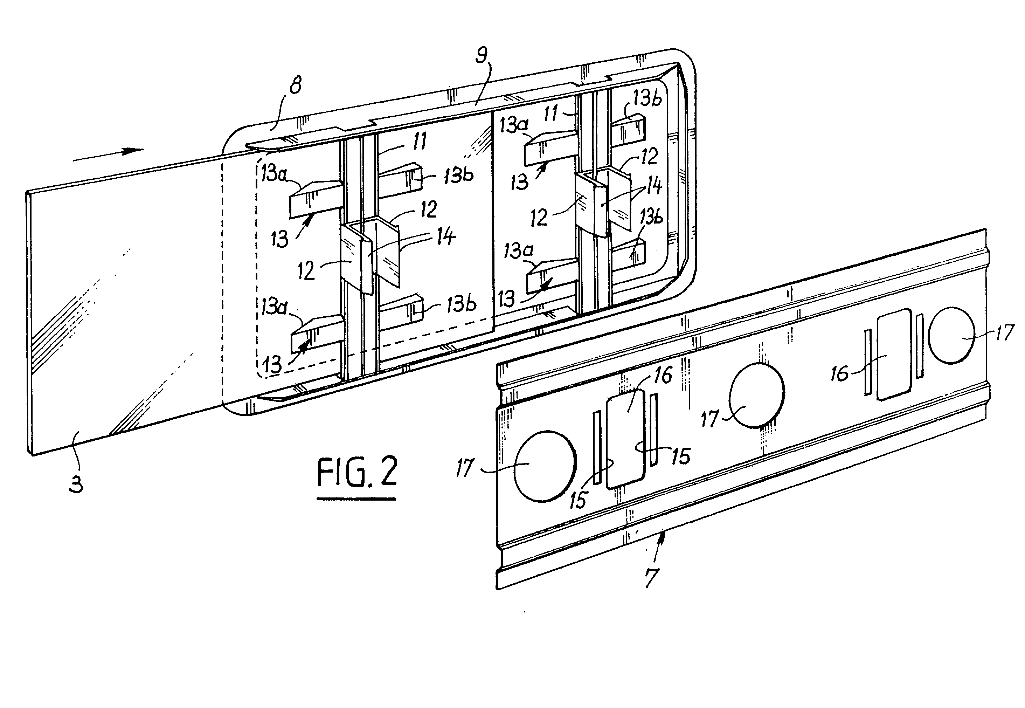

Le miroir 3 est disposé dans un support amovible 6 pouvant être fixé dans le logement 4 par clipsage sur des moyens de retenue 7 solidaires de l'écran 1. Dans ce mode de réalisation, le support 7 est constitué par une armature dont la périphérie épouse le contour du miroir 3, lequel est rectangulaire dans cette réalisation, et peut-être glissé dans l'armature 6. Celle-ci comprend donc un rebord périphérique 8 épousant le contour du miroir 3, ainsi qu'une nervure 9 perpendiculaire au rebord 8 et qui s'étend sur tout le pourtour de celui-ci à l'exception d'un petit côté, auquel correspond donc une ouverture (Fig. 2) permettant d'introduire le miroir 3 dans l'armature 6. Les grands côtés du rebord 8 sont reliés par deux barrettes transversales 11 munies chacune d'une paire de pattes 12 orientées perpendiculairement au plan général des barrettes 11 et du rebord 8, ainsi que d'une paire de languettes longitudinales 13, parallèles entre elles et s'étendant sensiblement dans le même plan que le rebord 8 et les barrettes 11.

Des chanfreins 13a sont ménagés sur les extrémités des languettes 13 tournées vers l'ouverture d'insertion du miroir 3, qui peut ainsi glisser sur les extrémités chanfreinées 13a durant son introduction dans l'armature 6, entre le pourtour interne du rebord 8 sur lequel il est maintenu en appui par les languettes 13. Ces dernières comportent également à cet effet des extrémités 13b ménagées de l'autre côté des chanfreins 13a par rapport aux barrettes 11.

Les deux paires de pattes 12 sont munies à leurs extrémités de ressauts chanfreinés 14 permettant de clipser les pattes 12, par écartement élastique de celles-ci, sur les bords opposés 15 de deux ouvertures 16 formées chacune en regard d'une paire de pattes 12 dans un insert rigide constituant les moyens précités 7 de retenue du support 6 et du miroir 3.

L'insert 7, de préférence métallique, est percé, dans cet exemple de réalisation, de trois trous circulaires 17 destinés à être traversés par des bossages 18, 19 (Figure 1) de mousse injectée servant d'appuis au miroir 3.

Durant la fabrication de l'écran 1 par injection de mousse, l'insert métallique 7 est placé au fond du logement 4 et recouvert d'une pellicule de mousse puis, avec l'ensemble de l'écran 1, est recouvert par le revêtement 2 de PVC. Le miroir 3 est de son côté glissé dans l'armature 6, entre les languettes 13 et le rebord 8 sur lequel il est plaqué. Après quoi il ne reste plus qu'à encliqueter les pattes 12 par leurs ressauts 14 sur les bords opposés 15 des ouvertures 16, les faces inclinées des ressauts 14 glissant sur ces bords, tandis que les pattes 12 se rapprochent l'une de l'autre, puis s'écartent élastiquement en agrippant l'insert 7 au travers de la feuille 2.

Le miroir 3 est alors en place.

L'armature de support 6 est réalisée en une matière plastique ayant une bonne tenue à la température, par exemple en polyamide 6/6 chargé de verre, qui résiste à des températures pouvant dépasser 105°C.

La simplicité du montage du miroir 3 et de son support 6 économise une main-d'œuvre importante, donc diminue le coût de réalisation du pare-soleil. De plus, la mise en œuvre d'un support 6 réalisé d'une seule pièce en un matériau plastique approprié, tel que celui mentionné ci-dessus, améliore la tenue en température du système de fixation du pare-soleil. La solidité de cette fixation est également améliorée par rapport à la technique antérieure, de même que l'esthétique du miroir 3, dont seul l'encadrement constitué par la face extérieure du rebord périphérique 8 est visible, une fois l'ensemble 3, 6 mis en place.

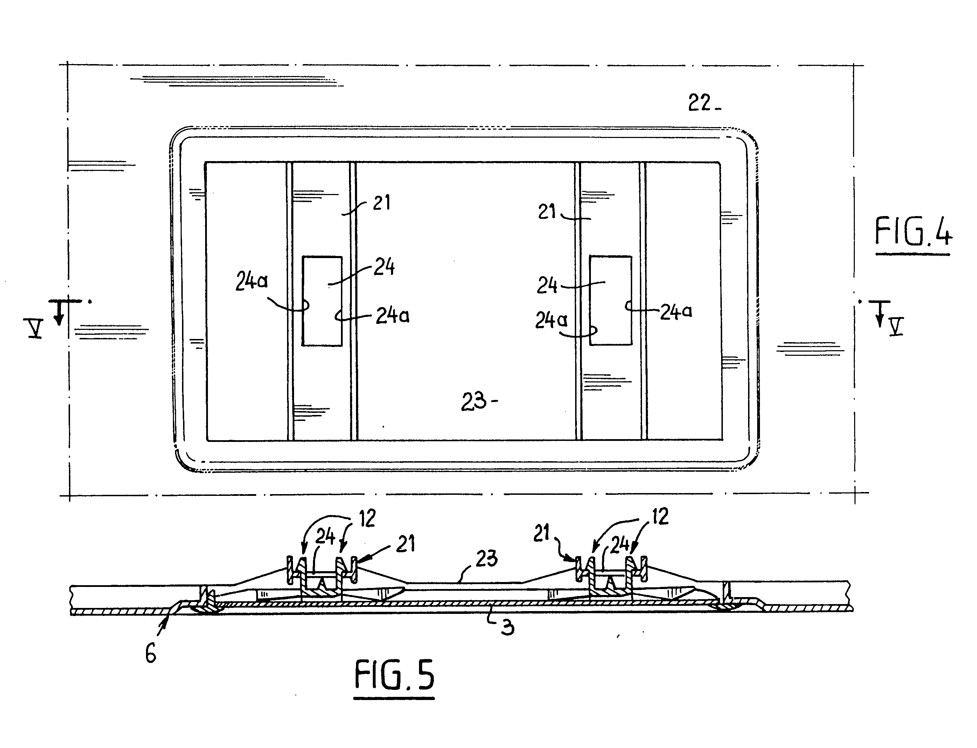

Dans la seconde forme de réalisation du pare-soleil, illustrée aux Fig. 4 et 5, les moyens de retenue de l'armature 6 sont constitués par deux plaquettes 21 venues de matière avec une demi-coquille 22 constituant une moitié de l'écran du pare-soleil conformément au brevet français 81 18 233 de la Demanderesse, cette demi-coquille étant réalisée par exemple en polypropylène.

Les deux barrettes 21 sont disposées transversalement dans un logement 23 de la demi-coquille 22, et sont percées chacune d'une ouverture 24 sur les bords opposés 24a, lesquels peuvent s'encliqueter les deux paires de pattes élastiques 12 (Fig. 5).

Le mode de montage est le même que dans la première forme de réalisation, et le pourtour interne du rebord périphérique 8 vient s'appuyer sur le pourtour correspondant du logement 23.

En variante, il serait possible de ne prévoir qu'une seule paire de pattes 12 de clipsage sur l'armature 6 ainsi qu'une seule ouverture correspondante 16 ou 24, à condition bien entendu que ces pattes et les bords de l'ouverture associée soient suffisamment écartés pour assurer une fixation convenable du miroir 3. Dans la réalisation des Fig. 4 et 5, les deux plaquettes transversales 21 seraient donc remplacées par une seule plaquette percée d'un trou de largeur suffisante.

## Revendications

1. Pare-soleil pour véhicule automobile comportant un écran (1) recouvert d'un revêtement (2) en matière plastique et muni d'un miroir disposé dans un support amovible (6) pouvant être fixé dans un logement (4) de l'écran (1) par clipsage sur des moyens de retenue (7) solidaires de l'écran (1), le support étant constitué par une armature (6) pourvue de pattes (12) susceptibles de s'engager dans les moyens (7) de retenue pour venir s'y encliqueter élastiquement par accrochage sur les bords (15, 24a) d'au moins une ouverture (16, 24) pratiquée dans ceux-ci, et l'armature (6) de support du miroir (3) comportant un rebord périphérique (8) épousant le contour du miroir (3), caractérisé en ce que l'armature comporte des languettes chanfreinées (13) solidaires de barrettes transversales (11) portant les pattes (12) de clipsage, le rebord (8) et les languettes (13) étant agencés de manière que le miroir puisse être introduit entre ceux-ci en glissant sous les chanfreins (13a) des languettes (13), qui maintiennent le miroir plaqué sur le rebord (8).

2. Pare-soleil selon la revendication 1, caractérisé en ce que le support (6) du miroir (3) est réalisé en un matériau résistant à des températures pouvant dépasser 105°C, par exemple, en polyamide 6/6 chargé de verre.

## Patentansprüche

1. Sonnenblende für Kraftfahrzeuge, mit einer Blende (1), welche von einer Umkleidung (2) aus Kunststoff bedeckt und mit einem Spiegel versehen ist, der in einem lösbaren Träger (6) angeordnet ist, welcher in einer Aufnahme (4) der Blende (1) durch Aufclipsen auf mit der Blende (1) fest verbundene Haltemittel (7) befestigt werden kann, wobei der Träger durch einen Beschlag (6) gebildet ist, welcher mit Klauen (12) versehen ist, welche sich in die Haltemittel (7) legen können und dort durch Einhaken an den Rändern (15, 24a) wenigstens einer in diesen ausgenommenen Öffnung (16, 24) elastisch einrasten, und der Spiegel(3)-Trägerbeschlag (6) eine Umfangsrandleiste (8) aufweist, welche sich an den Umriss des Spiegels (3) anschmiegt, dadurch gekennzeichnet, dass der Beschlag abgefaste Zungen (13) aufweist, welche mit die Clips-Klauen (12) tragenden Querstegen (11) fest verbunden sind, wobei die Randleiste (8) und die Zungen (13) so eingerichtet sind, dass der Spiegel zwischen diesen so eingeführt werden kann, dass er unter den Abfasungen (13a) der Zungen (13), welche den Spiegel auf die Randleiste (8) aufgelegt halten, gleitet.

2. Sonnenblende nach Anspruch 1, dadurch gekennzeichnet, dass der Träger (6) des Spiegels (1) aus einem gegen Temperaturen, die 105°C überschreiten können, beständigen Werkstoff, beispielsweise glasfaserverstärktem Polyamid 6/6 hergestellt ist.

## Claims

1. Sun visor for a motor vehicle comprising a shield (1) covered by a covering (2) made from a plastic material and provided with a mirror located in a detachable support (6), which can be fixed in a cavity (4) of shield (1) by clipping to retaining means (7) integral with shield (1), the support being constituted by a reinforcement (6) provided with tabs (12) which can be engaged in the retaining means (7) so as to elastically clip in by hooking onto the edges (15, 24a) of at least one opening (16, 24) made therein and the supporting reinforcement (6) of mirror (3) has a peripheral edge (8) adapting to the contour of mirror (3), characterized in that the reinforcement has chamfered strips (13) integral with transverse bars (11) carrying the clipping tabs (12), edge (8) and strips (13) being arranged in such a way that the mirror can be introduced between the latter, whilst sliding beneath the chamfers (13a) of strips (13), which maintain the mirror engaged against edge (8).

2. Sun visor according to claim 1, characterized in that the support (6) of mirror (3) is made from a material able to withstand temperatures which can exceed 105°C, e.g. glass-filled polyamide 6/6.

FIG. 1

FIG. 2

FIG. 3

0196961

FIG.4

FIG.5